# EUROPÄISCHE PATENTANMELDUNG

(11) **EP 0 955 193 A2**
(43) Veröffentlichungstag der Anmeldung: **10.11.1999**
(21) Anmeldenummer: 99109033.3
(22) Anmeldetag: 07.05.1999
(51) Int. Cl.: B60J 7/04, B60J 7/22

(54) **Fahrzeugdach mit Schiebedeckel und Windabweiser**

(30) Priorität: 08.05.1998 DE 19820573
(71) Anmelder: WEBASTO KAROSSERIESYSTEME GmbH, D-82131 Stockdorf (DE)
(72) Erfinder: Kohlpaintner, Georg, 82152 Martinsried (DE); Staltmayer, Thomas, 82131 Gauting (DE); Hirschvogel, Engelberg, 86928 Hofstetten (DE); Schwanitz, Günther, 82362 Weilheim (DE)
(74) Vertreter: Wiese, Gerhard

(57) **Zusammenfassung**

Fahrzeugdach mit mindestens einer Dachöffnung (11), die durch einen mittels eines Deckelantriebs (20) verstellbaren Schiebedeckel (12) wahlweise verschlossen oder mindestens teilweise freigelegt werden kann, und mit einem entlang der Vorderkante (13) der Dachöffnung angeordneten Windabweiser (14), der mittels eines Windabweiser-Verstellmechanismus (23) in Abhängigkeit von den Bewegungen des Schiebedeckels oder des Deckelantriebs zwischen einer Arbeitsstellung bei mindestens teilweise geöffnetem Dach und einer Ruhestellung bei geschlossenem Dach verstellbar ist. Zur Unterdrückung von Windabweiser-Pfeifgeräuschen ist der Windabweiser-Verstellmechanismus mit dem Deckelantrieb oder dem Schiebedeckel selbst derart gekoppelt, daß beim Öffnen des Daches der Windabweiser in die Arbeitsstellung verzögert ausgestellt wird, nachdem der Schiebedeckel erst um eine vorgegebene Wegstrecke (S) in Öffnungsrichtung verstellt ist.

## Beschreibung

Die Erfindung betrifft ein Fahrzeugdach mit mindestens einer Dachöffnung, die durch einen mittels eines Deckelantriebs verstellbaren Schiebedeckel wahlweise verschlossen oder mindestens teilweise freigelegt werden kann, und mit einem entlang der Vorderkante der Dachöffnung angeordneten Windabweiser, der mittels eines Windabweiser-Versteilmechanismus in Abhängigkeit von den Bewegungen des Schiebedeckeis oder des Deckelantriebs zwischen einer Arbeitsstellung bei mindestens teilweise geöffnetem Dach und einer Ruhestellung bei geschlossenem Dach verstellbar ist.

Fahrzeugdächer dieser Art sind unter anderem bekannt aus DE-OS 2 100 715, DE-PS 1 189 393, DE 44 44 630 C und DE 39 08 750 C. Bei den bekannten Fahrzeugdächern sind der Windabweiser-Verstellmechanismus und der Schiebedeckel oder der Deckelantrieb derart in Wirkverbindung miteinander, daß der Windabweiser bei Beginn einer Verstellbewegung des Schiebedeckels aus der Schließstellung in Richtung auf die Offenstellung in die Wandabweiser-Arbeitsstellung ausgestellt wird. In der Praxis hat es sich gezeigt, daß bei manchen Dachformen und höherer Fahrgeschwindigkeit durch den Fahrtwind verursachte Pfeifgeräusche entstehen können. Dies gilt insbesondere dann, wenn der Windabweiser in an sich bekannter Weise (z.B. DE 44 46 016A) mit sogenannten Antiwummer-Scharten ausgestattet ist.

Der Erfindung liegt die Aufgabe zugrunde, ein Fahrzeugdach der eingangs genannten Art zu schaffen, bei dem solche störenden Windabweisergeräusche vermieden oder mindestens reduziert sind.

Diese Aufgabe wird ausgehend von einem Fahrzeugdach mit den eingangs genannten Merkmalen erfindungsgemäß dadurch gelöst, daß der Windabweiser-Verstellmechanismus mit dem Deckelantrieb oder dem Schiebedeckel selbst derart gekoppelt ist, daß beim Öffnen des Daches der Windabweiser in die Arbeitsstellung verzögert ausgestellt wird, nachdem der Schiebedeckel erst um eine vorgegebene Wegstrecke in Öffnungsrichtung verstellt ist, die mindestens vorzugsweise 100 mm beträgt.

Die Erfindung beruht auf der Erkenntnis, daß die geschilderten störenden Pfeifgeräusche durch verzögertes Ausstellen des Windabweisers weitgehend oder vollständig vermieden werden können, d.h. dann, wenn der Windabweiser erst ausgestellt wird, wenn der Schiebedeckel bereits relativ weit nach hinten verschoben ist. Die vorgegebene Wegstrecke des Schiebedeckeis in Öffnungsrichtung vor Ausstellen des Windabweisers hängt von mehreren Faktoren ab, insbesondere von der jeweiligen Dachform und der Ausgestaltung des Windabweisers selbst. In der Regel liegt die vorgegebene Wegstrecke im Bereich von 150 bis 400 mm. Für gängige Dach- und Windabweiserformen hat sich eine Wegstrecke von 250 bis 350 mm als besonders wirkungsvoll erwiesen.

Der Windabweiser-Verstellmechanismus läßt sich relativ einfach aufbauen, wenn der Windabweiser in Richtung auf seine Arbeitsstellung federnd vorgespannt und mittels des Windabweiser-Versteilmechanismus in Abhängigkeit von den Bewegungen des Schiebedeckeis entgegen Federkraft in seine Ruhestellung verstellbar ist. Ein besonders stabiler Aufbau wird in einem solchen Fall dadurch erhalten, daß der Windabweiser beidseitig mit je einem Hebelarm verbunden ist, der um eine sich quer zur Fahrzeuglängsachse erstreckende dachfeste Achse an einem seitlichen Dachrahmenteil gelagert, bei Öffnen des Schiebedeckels unter Mitnahme des Windabweisers in seine Arbeitsstellung durch Federkraft ausschwenkbar und bei Schließen des Schiebedeckels durch Auflaufen einer in Abhängigkeit von der Deckelschließbewegung in Längsrichtung des Hebelarms verstellbaren Schiebebacke auf den Hebelarm unter Mitnahme des Windabweisers in seine Ruhestellung einschwenkbar ist.

Für die erfindungsgemäß vorgesehene verzögerte Ausstellung des Windabweisers beim Öffnen des Daches läßt sich in weiterer Ausgestaltung der Erfindung insbesondere dadurch sorgen, daß die Schiebebacke mit dem Schiebedeckel oder dem Dekkelantrieb über eine Totgangkupplung derart in Wirkverbindung steht, daß beim Öffnen des Schiebedeckels die Schiebebacke den zugehörigen Hebelarm für eine Ausschwenkbewegung erst freigibt, nachdem der Deckelantrieb den Schiebedeckel um die vorgegebene Wegstrecke in Öffnungsrichtung verstellt hat.

Der Windabweiser-Verstellmechanismus wird besonders robust und störunanfällig, wenn die Schiebebacke als entlang einer Führungsbahn des seitlichen Dachrahmenteils verschiebbar geführter Schlitten ausgebildet ist, der vorzugsweise mit einem einen Teil der Totgangkupplung bildenden Schaltkupplungselement verbunden ist, das abhängig von der jeweiligen Deckelstellung entweder mit dem Deckelantrieb oder einem dachfesten Bauteil in Eingriff steht. Dabei weist der Deckelantrieb vorteilhaft zu beiden Seiten der Dachöffnung in seitlichen Dachrahmenteilen längsverschiebbar geführte Antriebskabel auf, an denen jeweils ein erstes Gegenkupplungselement befestigt ist, wobei das dachfeste Bauteil mit einem zweiten Gegenkupplungselement versehen ist und das Schaltkupplungselement in Abhängigkeit von der Deckelstellung mit dem ersten oder dem zweiten Gegenkupplungselement in Eingriff gehalten ist.

Der Aufbau wird besonders einfach, wenn in weiterer Ausgestaltung der Erfindung das Schaltkupplungselement als Riegelstein ausgebildet ist, der in Abhängigkeit von der Deckelstellung entweder in eine Riegelsteinaufnahme in einem das erste Gegenkupplungselement bildenden Mitnehmer des Antriebskabels oder in eine Riegelsteinaufnahme in einem das zweite Gegenkupplungselement bildenden seitlichen Dachrahmenteil eintaucht. Dabei ist vorzugsweise der Riegelstein in Richtung auf das erste Gegenkupplungselement federnd vorgespannt und derart ausgebildet, daß bei einer Öffnungsbewegung des Deckels eine Mitnahme des Riegelsteins durch das erste Gegenkupplungselement erfolgt, nachdem der Schiebedeckel um die vorgegebene Wegstrecke in Öffnungsrichtung verstellt ist, während bei einer Deckelschließbewegung der Riegelstein aufgrund einer von der Deckelantriebskraft abgeleiteten Kraftkomponente die Riegelsteinaufnahme des ersten Gegenkupplungselements verläßt und sich in die Riegelsteinaufnahme des seitlichen Dachrahmenteils einlegt.

Der Schlitten kann mit dem Schaltkupplungselement insbesondere über eine von dem Schlitten nach hinten weisende Koppelstange verbunden sein, deren Längsabmessung die genannte vorgegebene Wegstrecke bestimmt.

Ein bevorzugtes Ausführungsbeispiel der Erfindung ist nachstehend unter Bezugnahme aufdie beiliegenden Zeichnungen näher erläutert. Dabei zeigen
Fign. 1 bis 3 schematische Dachlängsschnitte für verschiedene Bewegungsphasen des Schiebedeckels und des Windabweisers sowie
Fig. 4 bis 6 perspektivische Detailansichten der miteinander zusammenwirkenden Teile des Windabweiser-Verstellmechanismus und des Deckelantriebs in Stellungen entsprechend den Fign. 1, 2 bzw. 3.

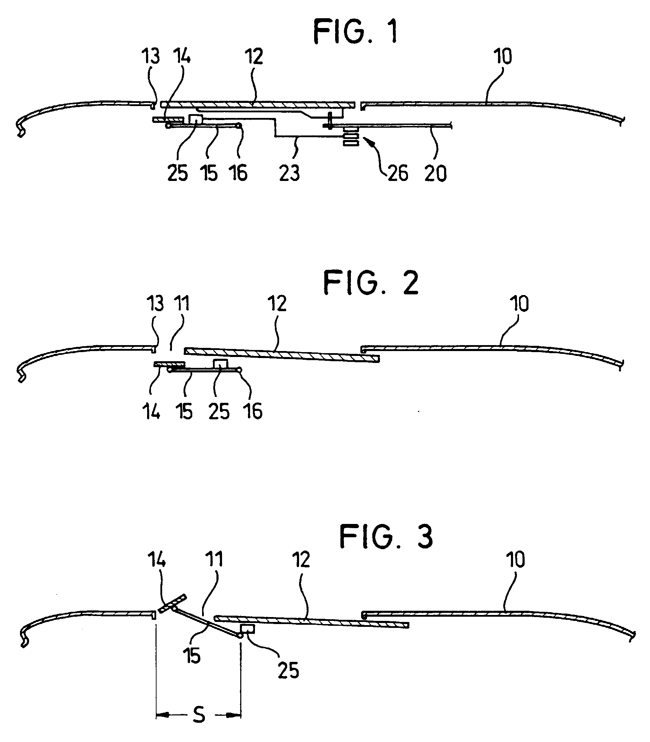

Das in den Fign. 1 bis 3 schematisch dargestellte Fahrzeugdach 10 weist eine Dachöffnung 11 auf, die mittels eines Schiebedeckels 12 wahlweise verschlossen oder mindestens teilweise freigelegt werden kann. In den Fign. 1 bis 3 ist der Schiebedeckel 12 als Teil eines einfachen Schiebedaches angedeutet. Es versteht sich jedoch, daß das Fahrzeugdach auch in anderer Weise ausgelegt sein kann, insbesondere als Schiebe/Hebedach, Spoilerdach, Mehrdeckeldach oder dergleichen.

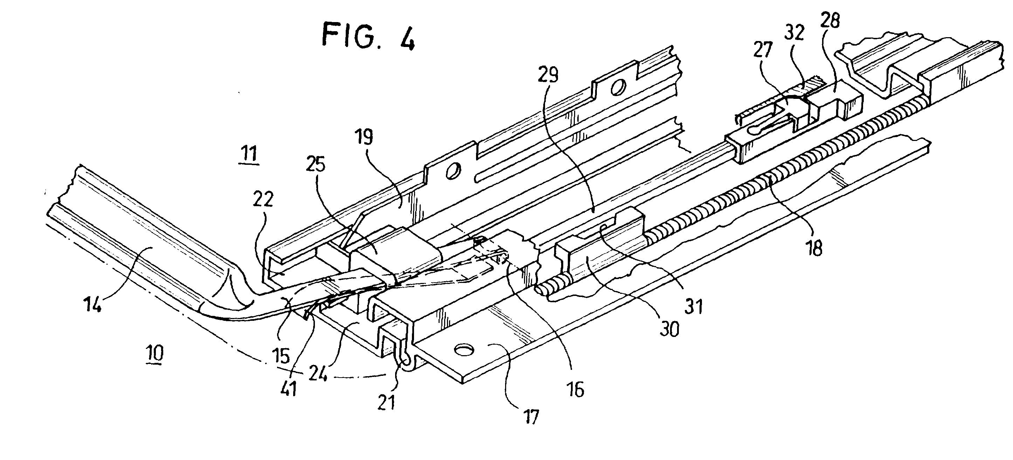

Entlang der Vorderkante 13 der Dachöffnung 11 ist ein Windabweiser 14 angeordnet, der, wie im einzelnen aus den Fign. 4, 5 und 6 hervorgeht, beidseitig mit je einem Hebelarm 15 verbunden ist. Jeder der Hebelarme 15 ist um eine sich quer zur Fahrzeuglängsachse erstreckende dachfeste Achse 16 an einem seitlichen Dachrahmenteil 17 gelagert.

Zum Verstellen des Schiebedeckeis 12 ist ein Deckelantrieb vorgesehen, zu dem drucksteife Antriebskabel 18 und zu beiden Deckelseiten sitzende Schlitten/Kulissenanordnungen 19 gehören. Solche Deckelantriebe sind an sich bekannt und bedürfen daher vorliegend keiner näheren Erläuterung. Beispielsweise kann der Deckelantrieb gleich oder ähnlich den Deckelantrieben ausgebildet sein, die in DE 35 32 104 A oder DE 37 15 268 C näher beschrieben sind. Ein solcher Deckelantrieb ist in Fig. 1 insgesamt bei 20 angedeutet. Das Antriebskabel 18 ist in einem Kabelkanal 21 des Dachrahmenteils 17 längsverschiebbar geführt. Ein Führungskanal 22 des Dachrahmenteils 17 dient der Längsführung der Schlitten-Kulissen-anordnung 19.

Der Windabweiser 14 ist in nicht näher veranschaulichter Weise in Richtung auf seine Arbeitsstellung federnd vorgespannt, in welcher er in Fig. 3 schematisch dargestellt ist. Ein in Fig. 1 insgesamt mit 23 bezeichneter Windabweiser-Verstellmechanismus ist so ausgelegt, daß er den Windabweiser 14 in Abhängigkeit von den Bewegungen des Schiebedeckels 12 entgegen der Kraft einer Feder 41 in seine Ruhestellung verstellt. In dieser Ruhestellung ist der Windabweiser 14 in den Fign. 1 und 2 veranschaulicht. Zu dem Windabweiser-Verstelimechanismus 23 gehört eine Schiebebacke, die als entlang einer Führungsbahn 24 des seitlichen Dachrahmenteils 17 verschiebbar geführter Schlitten 25 ausgebildet ist. Dieser Schlitten 25 läuft beim Schließen des Schiebedeckels 12 in der in den Fign. 1, 2, 4 und 5 gezeigten Weise auf den Hebelarm 15 auf, um den Hebelarm unter Mitnahme des Windabweisers 14 in seine Ruhestellung einzuschwenken. Der Schlitten 25 steht bei der veranschaulichten Ausführungsform mit dem Deckelantrieb 20 über eine in Fig. 1 bei 26 angedeutete Totgangkupplung derart in Wirkverbindung, daß beim Öffnen des Schiebedeckels 12 der Schlitten 25 den zugehörigen Hebelarm 15 für eine Ausschwenkbewegung erst freigibt, nachdem der Deckelantrieb 20 den Schiebedeckel 12 in Öffnungsrichtung um die vorgegebene Wegstrecke verstellt hat, die in Fig. 3 mit 5 bezeichnet ist.

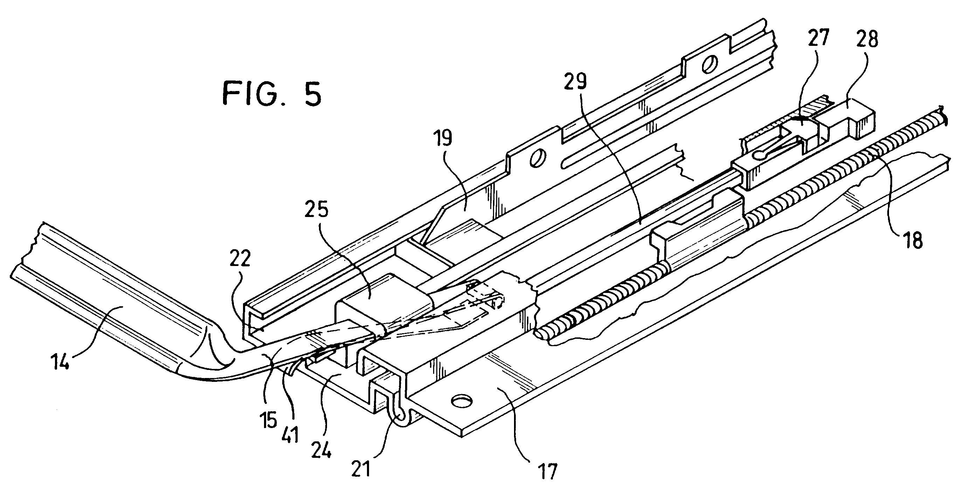

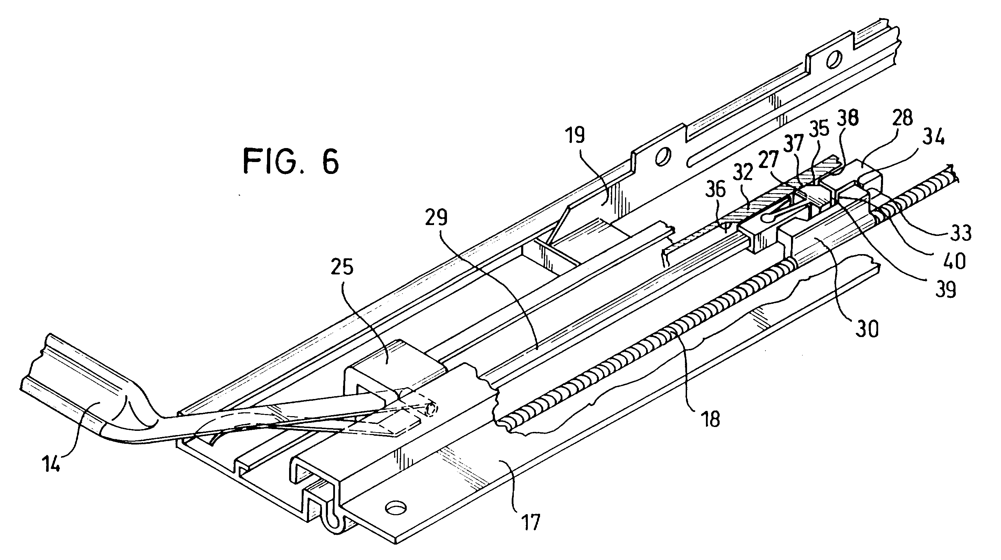

Zu der Totgangkupplung 26 gehört ein Schaltkupplungselement in Form eines Riegelsteins 27, der schwenkbar in einem Riegelsteinlager 28 sitzt, das mit dem Schlitten 25 über eine sich von dem Schlitten 25 nach hinten erstreckende Koppelstange 29 verbunden ist. Die Längsabmessung der Koppelstange 29 bestimmt die vorgegebene Wegstrecke S. An dem Antriebskabel 18 ist ein Mitnehmer 30 mit einer Riegelsteinaufnahme 31 befestigt, während in dem dachfesten Dachrahmenteil 17 eine weitere Riegelsteinaufnahme 32 ausgebildet ist. Der Mitnehmer 30 mit Riegelsteinaufnahme 31 bildet ein erstes Gegenkupplungselement, während das Dachrahmenteil 17 mit seiner Riegelsteinaufnahme 32 ein zweites Gegenkupplungselement darstellt. Der Riegelstein 27 taucht in Abhängigkeit von der Stellung des Schiebedeckels 12 entweder in die Riegelsteinaufnahme 31 des Mitnehmers 30 ein (Fig. 6) oder in die Riegelsteinaufnahme 32 des Dachrahmenteils 17 (Fign. 4 und 5).

Bei geschlossenem Dach (Fign. 1 und 4) ist die Kupplung zwischen dem Deckelantrieb 20 und dem Windabweiser-Verstelimechanismus 23 aufgehoben. Der in dem Riegelsteinlager 28 schwenkbar gelagerte Riegelstein 27 taucht in die Riegelsteinaufnahme 32 des Dachrahmenteils 17 ein, wodurch der Schlitten 25 in der Stellung verriegelt ist, in welcher er den Windabweiser 14 in Ruhestellung hält. Dieser Zustand bleibt bei einem anfänglichen Zurückschieben des Schiebedeckels 12 in Öffnungsrichtung aufrechterhalten (Fign. 2 und 5). Wenn der Deckel jedoch die vorbestimmte Wegstrecke S in Öffnungsrichtung durchlaufen hat, legt sich der Mitnehmer 30 mit seiner hinteren Stirnfläche 33 gegen eine nach vorne weisende Schulter 34 des Riegelsteinlagers 28 an, wodurch das Riegelsteinlager 28 samt Koppelstange 29 und Schlitten 25 von dem Antriebskabel 18 nach hinten mitgenommen wird. Der Schlitten 25 gibt den Hebelarm 15 für eine Ausschwenkbewegung frei. Der Windabweiser 14 wird durch Federkraft in seine Arbeitsstellung gebracht. Eine Schrägfläche 35 des Riegelsteins 27 legt sich an eine Gegenfläche 36 der Riegelsteinaufnahme 32 an. Dabei wird von der Deckelantriebskraft eine Kraftkomponente abgeleitet, welche den Riegelstein 27 aus der Riegelsteinaufnahme 32 herausschwenkt und in die Riegelsteinaufnahme 31 des Mitnehmers 30 übergehen läßt. Bei weiterem Zurückfahren des Deckels 12 bleibt die Kupplung zwischen Deckelantrieb 20 und Windabweiser-Verstellmechanismus 23 aufrechterhalten.

Wird umgekehrt der Schiebedeckel 12 ausgehend von der Offenstellung in Richtung aufdie Schließstellung verschoben, bleibt zunächst der Schlitten 25 über die Koppelstange 29, das Riegelsteinlager 28 und den Riegelstein 27 mit dem an dem Antriebskabel 18 befestigten Mitnehmer 30 gekuppelt, weil der Riegelstein 27 durch Anlage seiner Seitenfläche 37 an einer Führungsfläche 38 des Dachrahmenteils 17 mit der Riegelsteinaufnahme 31 des Mitnehmers 30 in Eingriff gehalten ist. Hat sich der Schiebedeckel 12 jedoch der Schließstellung bis auf die vorgegebene Wegstrecke S genähert, steht der Riegelstein 27 der Riegelsteinaufnahme 32 gegenüber. Durch das Zusammenwirken zwischen einer Schrägfläche 39 des Riegelsteins 27 und einer Gegenfläche 40 des Mitnehmers 30 wird der Riegelstein 27 jetzt zu einer Schwenkbewegung gegenüber dem Riegelsteinlager 28 veranlaßt, wobei er die Riegelsteinaufnahme 31 verläßt und sich in die Riegelsteinaufnahme 32 einlegt. Dadurch ist die Kupplung zwischen dem Deckelantrieb 20 und dem Windabweiser-Verstellmechanismus 23 aufgehoben. Der Schlitten 25 hat im Zuge des weiteren Bewegungsverlaufs über den Hebelarm 15 den Windabweiser 14 wieder in die Ruhestellung nach unten geschwenkt. Der Deckel 12 kann in die vollständig geschlossene Lage gefahren werden, während der Windabweiser-Verstellmechanismus mit Bezug aufdas Dachrahmenteil 17 verriegelt ist.

Es versteht sich, daß die Totgangkupplung grundsätzlich auch auf andere Weise verwirklicht sein kann, beispielsweise als entsprechend dem geschilderten Bewegungsablauf gesteuerte magnetische Schaltkupplung.

| Bezugszeichenliste | | | |
|---|---|---|---|
| **10** | **Fahrzeugdach** | **32** | **Riegelsteinaufnahme** |
| **11** | **Dachöffnung** | **33** | **Stirnfläche** |
| **12** | **Schiebedeckel** | **34** | **Schulter** |
| **13** | **Vorderkante** | **35** | **Schrägfläche** |
| **14** | **Windabweiser** | **36** | **Gegenfläche** |
| **15** | **Hebelarm** | **37** | **Seitenfläche** |
| **16** | **Achse** | **38** | **Führungsfläche** |
| **17** | **Dachrahmenteil** | **39** | **Schrägfläche** |
| **18** | **Antriebskabel** | **40** | **Gegenfläche** |
| **19** | **Schlitten-Kulissenanordnung** | **41** | **Feder** |
| **20** | **Deckelantrieb** | | |
| **21** | **Kabelkanal** | | |
| **22** | **Führungskanal** | | |
| **23** | **Windabweiser-Verstellmechanismus** | | |
| **24** | **Führungsbahn** | | |
| **25** | **Schlitten** | | |
| **26** | **Totgangkupplung** | | |
| **27** | **Riegelstein** | | |
| **28** | **Riegelsteinlager** | | |
| **29** | **Koppelstange** | | |
| **30** | **Mitnehmer** | | |
| **31** | **Riegelsteinaufnahme** | | |

## Patentansprüche

1. Fahrzeugdach mit mindestens einer Dachöffnung (11), die durch einen mittels eines Deckelantriebs (20) verstellbaren Schiebedeckel (12) wahlweise verschlossen oder mindestens teilweise freigelegt werden kann, und mit einem entlang der Vorderkante (13) der Dachöffnung angeordneten Windabweiser (14), der mittels eines Windabweiser-Verstellmechanismus (23) in Abhängigkeit von den Bewegungen des Schiebedeckeis oder des Deckelantriebs zwischen einer Arbeitsstellung bei mindestens teilweise geöffnetem Dach (10) und einer Ruhestellung bei geschlossenem Dach verstellbar ist, **dadurch gekennzeichnet, daß** der Windabweiser-Verstelimechanismus (23) mit dem Deckelantrieb (20) oder dem Schiebedeckel (12) selbst derart gekoppelt ist, daß beim Öffnen des Schiebedeckels (12) der Windabweiser (14) erst dann verzögert in die Arbeitsstellung ausgestellt wird, nachdem der Schiebedeckel (12) erst um eine vorgegebene Wegstrecke (S) in Öffnungsrichtung verstellt ist.

2. Fahrzeugdach nach Anspruch 1, dadurch gekennzeichnet, daß der Windabweiser (14) in Richtung auf seine Arbeitsstellung mittels einer Feder (41) vorgespannt und mittels des Windabweiser-Verstellmechanismus (23) in Abhängigkeit von den Bewegungen des Schiebedeckels (12) entgegen der Kraft der Feder (41) in seine Ruhestellung verstellbar ist.

3. Fahrzeugdach nach Anspruch 2, dadurch gekennzeichnet, daß der Windabweiser (14) beidseitig mit je einem Hebelarm (15) verbunden ist, der um eine sich quer zur Fahrzeuglängsachse erstreckende dachfeste Achse (16) an einem seitlichen Dachrahmenteil (17) gelagert, bei Öffnen des Schiebedeckels (12) unter Mitnahme des Windabweisers in seine Arbeitsstellung durch Federkraft ausschwenkbar und bei Schließen des Schiebedeckels durch Auflaufen einer in Abhängigkeit von der Deckelschließbewegung in Längsrichtung des Hebelarms verstellbaren Schiebebacke (Schlitten 25) auf den Hebelarm unter Mitnahme des Windabweisers in seine Ruhestellung einschwenkbar ist.

4. Fahrzeugdach nach Anspruch 3, dadurch gekennzeichnet, daß die Schiebebacke (Schlitten 25) mit dem Schiebedeckel (12) oder dem Deckelantrieb (20) über eine Totgangkupplung (26) derart in Wirkverbindung steht, daß beim Öffnen des Schiebedeckels die Schiebebacke den zugehörigen Hebelarm (15) für eine Ausschwenkbewegung erst freigibt, nachdem der Deckelantrieb den Schiebedeckel um die vorgegebene Wegstrecke (S) in Öffnungsrichtung verstellt hat.

5. Fahrzeugdach nach Anspruch 4, dadurch gekennzeichnet, daß die Schiebebacke als entlang einer Führungsbahn (24) des seitlichen Dachrahmenteils (17) verschiebbar geführter Schlitten (25) ausgebildet ist.

6. Fahrzeugdach nach Ansprüchen 4 und 5, dadurch gekennzeichnet, daß der Schlitten (25) mit einem einen Teil der Totgangkupplung (26) bildenden Schaltkupplungselement (Riegelstein 27) verbunden ist, das abhängig von der jeweiligen Deckelstellung entweder mit dem Deckelantrieb (20) oder einem dachfesten Bauteil (Dachrahmenteil 17) in Eingriff steht.

7. Fahrzeugdach nach Anspruch 6, dadurch gekennzeichnet, daß der Deckelantrieb (20) zu beiden Seiten der Dachöffnung (11) in seitlichen Dachrahmenteilen (17) längsverschiebbar geführte Antriebskabel (18) aufweist, an denen jeweils ein erstes Gegenkupplungselement (Mitnehmer 30) befestigt ist, daß das dachfeste Bauteil mit einem zweiten Gegenkupplungselement (Dachrahmenteil 17) versehen ist, und daß das Schaltkupplungselement (Riegelstein 27) in Abhängigkeit von der Deckelstellung mit dem ersten oder dem zweiten Gegenkupplungselement in Eingriffgehalten ist.

8. Fahrzeugdach nach Ansprüchen 6 und 7, dadurch gekennzeichnet, daß das Schaltkupplungselement als Riegelstein (27) ausgebildet ist, der in Abhängigkeit von der Deckelstellung entweder in eine Riegelsteinaufnahme (31) in einem das erste Gegenkupplungselement bildenden Mitnehmer (30) des Antriebskabels (18) oder in eine Riegelsteinaufnahme (32) in einem das zweite Gegenkupplungselement bildenden seitlichen Dachrahmenteil (17) eintaucht.

9. Fahrzeugdach nach Anspruch 8, dadurch gekennzeichnet, daß der Riegelstein (27) derart ausgebildet ist, daß bei einer Öffnungsbewegung des Schiebedeckels (12) eine Mitnahme des Riegelsteins durch das erste Gegenkupplungselement (Mitnehmer 30) erfolgt, nachdem der Schiebedeckel um die vorgegebene Wegstrecke (S) in Öffnungsrichtung verstellt ist, während bei einer Deckelschließbewegung der Riegelstein aufgrund einer von der Deckelantriebskraft abgeleiteten Kraftkomponente die Riegelsteinaufnahme (31) des ersten Gegenkupplungselements verläßt und sich in die Riegelsteinaufnahme (32) des seitlichen Dachrahmenteils (17) einlegt.

10. Fahrzeugdach nach einem der Ansprüche 6 bis 9, dadurch gekennzeichnet, daß der Schlitten (25) mit dem Schaltkupplungselement (Riegelstein 27) über eine von dem Schlitten nach hinten weisende Koppelstange (29) verbunden ist, deren Längsabmessung die vorgegebene Wegstrecke (S) bestimmt.

11. Fahrzeugdach nach einem der vorhergehenden Ansprüche, dadurch gekennzeichnet, daß die vorgegebene Wegstrecke (S) wenigstens 100 mm beträgt, vorzugsweise im Bereich von 150 bis 400 mm und besonders im Bereich von 250 bis 350 mm, liegt.
